# EUROPÄISCHE PATENTANMELDUNG

(11) **EP 1 419 957 A2**
(43) Veröffentlichungstag der Anmeldung: **19.05.2004**
(21) Anmeldenummer: 03020736.9
(22) Anmeldetag: 12.09.2003
(51) Int. Cl.: B62D 55/125

(54) **Turasrad und Verfahren zu seiner Herstellung**

(30) Priorität: 12.11.2002 DE 10253875
(71) Anmelder: Kässbohrer Geländefahrzeug AG, 88471 Laupheim (DE)
(72) Erfinder: Helmut Kanzler, 89269 Voehringen (DE)
(74) Vertreter: Wilhelm, Peter

(57) **Zusammenfassung**

Ein Turasrad (1) mit einer Stirnverzahnung (2), auf der im Betrieb des Kettenlaufwerkes Führungselemente einer Kette abrollen, wobei die Stirnverzahnung zumindest abschnittsweise aus einem geräuschdämpfenden Werkstoff besteht, ist bekannt. Erfindungsgemäß ist die Stirnverzahnung durch einen Elastomerformkörper (1a) gebildet, in dem eine Stützringstruktur aus einem formstabilen Werkstoff, insbesondere aus Metall, mit einer ringförmigen Verzahnungsstruktur, deren Zahnteilung einer Zahnteilung der Stirnverzahnung entspricht, formschlüssig integriert ist.

## Beschreibung

Die Erfindung betrifft ein Turasrad für ein Kettenlaufwerk eines Kettenfahrzeugs mit einer Stirnverzahnung aus einem geräuschdämpfenden Werkstoff, auf der im Betrieb des Kettenlaufwerkes Führungselemente einer Kette abrollen, und die innenseitig durch eine Stützringstruktur aus einem formstabilen Werkstoff mit einer ringförmigen Verzahnungsstruktur verstärkt ist, deren Zahnteilung einer Zahnteilung der Stirnverzahnung entspricht, sowie ein Verfahren zur Herstellung eines solchen Turasrades.

Ein derartiges Turasrad ist durch ein Kettenfahrzeug in Form eines Pistenfahrzeugs der Marke "Pistenbully" durch die Anmelderin allgemein bekannt. Ein derartiges Turasrad ist als Kunststoffrad ausgeführt. Das Kunststoffrad weist einen metallischen Nabenringbereich auf, der eine mit einer Verzahnungsstruktur versehene Stützringstruktur besitzt. Die Stützringstruktur stützt von innen die ringförmige Stirnverzahnung, die aus Kunststoff, nämlich Polyurethan, besteht. Der metallische Nabenringbereich mit der Stützringstruktur ist als Aluminiumgussteil ausgeführt. Der Stirnverzahnungsring aus Kunststoff hat geräuschdämpfende Eigenschaften. Die Stirnverzahnung aus Kunststoff unterliegt einem hohen Verschleiß, wobei insbesondere Zähne der Stirnverzahnung beschädigt werden können. Die Teilung der Stirnverzahnung kann sich durch beschädigte Zähne ändern. Die Funktion des Kettenlaufwerkes ist hierdurch beeinträchtigt.

Aufgabe der Erfindung ist es, ein Turasrad der eingangs genannten Art zu schaffen, das einen geräuscharmen und funktionssicheren Kettenlauf ermöglicht.

Aufgabe der Erfindung ist es zudem, ein Verfahren zur Herstellung eines Turasrades der eingangs genannten Art zu schaffen, das einfach, funktionssicher und kostengünstig durchführbar ist.

Die Aufgabe wird für das Turasrad dadurch gelöst, dass die Stirnverzahnung durch einen Elastomerformkörper gebildet ist. Durch die erfindungsgemäße Lösung wird für die Stirnverzahnung eine gewisse elastische Nachgiebigkeit erreicht, durch die zum einen eine Geräuschdämpfung beim Abrollen von Führungselementen einer entsprechenden Kette und zum anderen eine sichere, spielfreie Führung der Kette erzielt werden. Besonders vorteilhaft wird als Elastomer eine Gummimischung eingesetzt. Die Stützringstruktur mit der Verzahnungsstruktur gewährleistet in Kombination mit dem Elastomerwerkstoff zudem, dass jeder Zahn der Stirnverzahnung von innen her ausreichend gestützt ist, so dass kein Abbrechen von Zähnen der Stirnverzahnung erfolgen kann. Das Turasrad weist somit ausreichend gute Notlaufeigenschaften auch für den Fall auf, dass der Elastomerwerkstoff durch Verschleiß oder Beschädigung teilweise entfernt ist. Die Verzahnungsstruktur und insbesondere die gesamte Stützringstruktur werden vorzugsweise in eine Werkzeugform eingebettet, in der das Elastomer durch Gießen, bei einer Gummimischung insbesondere durch Vulkanisieren, eingebracht und zu dem Stirnverzahnungsring geformt wird. Das Elastomer umschließt während seiner Herstellung zwangsläufig die Verzahnungsstruktur und die Stützringstruktur, so dass eine innige Verbindung zwischen der Stützringstruktur und dem Elastomer-Stirnverzahnungsring hergestellt ist. Der Elastomerwerkstoff, insbesondere die Gummimischung, weist kautschukartige, elastische Eigenschaften in einem weiten Temperaturbereich, insbesondere zwischen +50°C bis -50°C, auf.

In Ausgestaltung der Erfindung ist der Elastomerformkörper aus einer Gummimischung hergestellt, die verschleißfest, temperaturbeständig bei niedrigen Temperaturen sowie formbeständig ist. Dies ist eine besonders vorteilhafte Ausgestaltung, da die hohe Elastizität und die große Verschleißfestigkeit von Gummi ausgenützt werden. Insbesondere wird durch die entsprechende Gummimischung eine Elastizität auch bei äußerst niedrigen Temperaturen, insbesondere zwischen -10°C bis -50°C, aufrechterhalten, die den Einsatz des Kettenlaufwerkes bei Schneepistenfahrzeugen ermöglicht.

In weiterer Ausgestaltung der Erfindung ist die Verzahnungsstruktur in einer Radialebene zu einer Drehachse des Turasrades ausgerichtet, und der Verzahnungsstruktur sind auf Höhe der Zahnspitzen axial erstreckte Verstärkungsstege zugeordnet, die auf einem koaxial zur Verzahnungsstruktur angeordneten Trägerring gehalten sind. Dadurch wird über die gesamte Tiefe jedes Zahnes eine ausreichende Stützung erzielt. Die Stützringstruktur bildet ein Stützskelett, das die Elastomerstirnverzahnung verstärkt und die entsprechenden Notlaufeigenschaften gewährleistet.

In weiterer Ausgestaltung der Erfindung ist die Verzahnungsstruktur außenseitig an einer Ringscheibe vorgesehen, die innenseitig mit Befestigungsmitteln zur Verbindung des Turasrades mit einer fahrzeugseitigen Antriebsnabe versehen ist. Die Ringscheibe umfasst somit zum einen die Verzahnungsstruktur und zum anderen Befestigungsmittel, mit denen eine fahrzeugseitige oder kettenlaufwerkseitige Anbindung des Turasrades erzielbar ist.

In weiterer Ausgestaltung der Erfindung ist als Befestigungsmittel ein einstückig mit der Verzahnungsstruktur gestalteter Befestigungsring vorgesehen, der mit Befestigungsaufnahmen, insbesondere mit auf Gewindebohrungen der Antriebsnabe abgestimmten Bohrungen, versehen ist. Dadurch wird eine einfache Schraubbefestigung des Turasrades auf der fahrzeugseitigen Antriebsnabe erzielt, so dass ein einfacher Austausch des Turasrades gewährleistet ist.

In weiterer Ausgestaltung der Erfindung ist der Befestigungsring in den Stirnverzahnungsring aus Elastomer eingebettet, und der Stirnverzahnungsring ist auf Höhe der Befestigungsaufnahmen mit Durchtritten versehen. Dadurch ist auch der Befestigungsring von dem Elastomerwerkstoff umschlossen. Die Durchtritte, die in der Form bereits vorgesehen sind, gewährleisten dennoch eine sichere Verschraubbarkeit des Turasrades mit der Antriebsnabe.

In weiterer Ausgestaltung der Erfindung ist die Stützringstruktur als stoffschlüssig verbundene Konstruktionseinheit, insbesondere als Schweißkonstruktion, gestaltet. Dies ist eine besonders einfach herstellbare und stabile sowie funktionssichere Ausgestaltung.

Für das Verfahren wird die der Erfindung zugrundeliegende Aufgabe dadurch gelöst, dass die Stützringstruktur in eine Form zur Herstellung des Elastomerformkörpers eingebettet wird, und dass anschließend in die Form flüssiges Elastomermaterial eingeführt wird, das die Stützringstruktur umschließt. Hierdurch wird in einem Arbeitsgang die Herstellung des Elastomerformkörpers und gleichzeitig die formschlüssige Integration der Stützringstruktur in den Elastomerformkörper erzielt. Insbesondere wird eine Gummimischung durch einen Vulkanisierungsvorgang um die Stützringstruktur geformt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt eine Rückansicht eines Elastomerformkörpers einer Ausführungsform eines erfindungsgemäßen Turasrades,
- Fig. 2: eine Seitenansicht des Elastomerformkörpers nach Fig. 1,
- Fig. 3: eine Frontansicht des Turasrades mit strichpunktiert dargestelltem Innenleben,
- Fig. 4: eine Schnittdarstellung des Turasrades nach Fig. 3 entlang der Schnittlinie IV-IV in Fig. 3,
- Fig. 5: eine in dem Turasrad integrierte Stützringstruktur und
- Fig. 6: eine Schnittdarstellung der Stützringstruktur nach Fig. 5 entlang der Schnittlinie VI-VI nach Fig. 5.

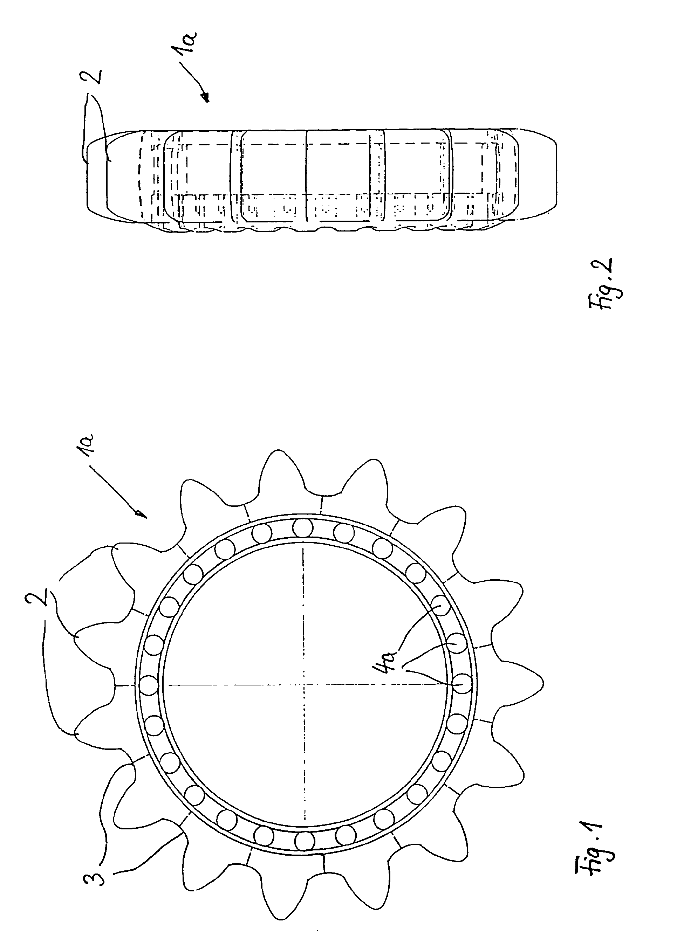

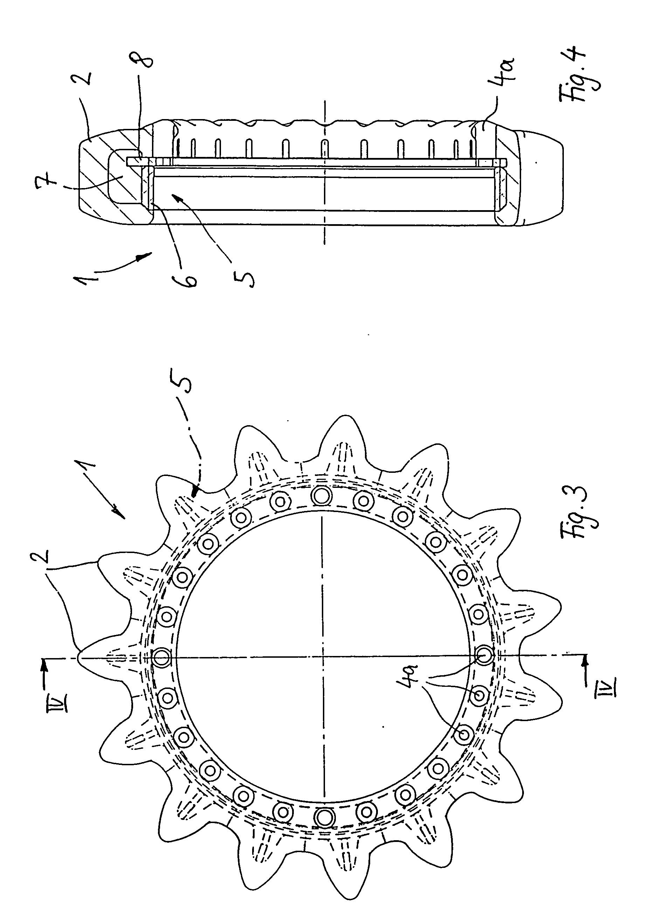

Ein Turasrad, wie es in den Fig. 1 bis 6 dargestellt ist und nachfolgend näher erläutert wird, wird für ein Kettenlaufwerk eines Kettenfahrzeugs in Form eines Pistenfahrzeugs eingesetzt, das vorzugsweise im Wintereinsatz für die Präparierung von Ski- oder Snowboard-Gelände verwendet wird. Ein derartiges Turasrad 1 wird in grundsätzlich bekannter Weise an einem vorderen oder rückseitigen Endbereich des Kettenlaufwerkes auf einer Antriebsnabe des Kettenfahrzeugs befestigt, die Teil eines Antriebsystems des Kettenfahrzeugs ist. Auf jeder Fahrzeugseite ist jeweils ein Kettenlaufwerk vorgesehen, wobei beide Kettenlaufwerke mit jeweils einem Turasrad versehen sind.

Das Turasrad 1, gemäß den Fig. 1 bis 6, weist eine Stirnverzahnung 2 aus einem Elastomermaterial, vorzugsweise einer Gummimischung, auf, wobei die Stirnverzahnung 2 als ringförmiger Elastomerformkörper 1a gestaltet ist. In dem Elastomerformkörper 1a formschlüssig integriert ist eine Stützringstruktur 5, die die Stirnverzahnung und damit den Elastomerformkörper 1a im Inneren versteift. Der Elastomerformkörper 1a, der die Stirnverzahnung 2 bildet, ist in einer Werkzeugform hergestellt, die bei einer Gummimischung als Vulkanisierform ausgebildet ist. Das flüssige Elastomermaterial wird in die Form eingebracht. Um eine formschlüssige Verbindung mit der innenliegenden Stützringstruktur 5 zu erzielen, wird die Stützringstruktur 5 vor dem Einbringen des flüssigen Elastomermaterials in die Werkzeugform eingebettet. Die Positionierung innerhalb der Werkzeugform entspricht der späteren Lage der Stützringstruktur 5 im Elastomerformkörper. Nach dem Einbringen des flüssigen Elastomermaterials und dem Aushärten des Elastomerformkörpers umschließt das Elastomermaterial die Stützringstruktur 5 formschlüssig, so dass die Stützringstruktur 5 und der Elastomerformkörper eine gemeinsame Einheit ergeben, die das Turasrad 1 darstellt.

Der Elastomerformkörper, der die Stirnverzahnung bildet, weist eine Vielzahl von radial nach außen abragenden Zähnen auf, die nach Art einer Evolventenverzahnung gestaltet sind. Zwischen den einzelnen Zähnen liegen konkav gewölbte Zahngründe 3. Das Elastomermaterial, vorzugsweise die entsprechende Gummimischung, ist derart auf entsprechende metallische Führungselemente der jeweiligen Kette des Kettenlaufwerkes abgestimmt, dass sich das Elastomermaterial als jeweils geeigneter Reibpartner zu dem metallischen Material der Führungselemente der jeweiligen Kette ergibt. Die Auswahl des Elastomermaterials ist so gewählt, dass eine gute Dämpfung und eine gute Laufruhe, eine ausreichende Witterungsbeständigkeit, insbesondere für den Winterund Schneebetrieb, sowie eine hohe Verschleißfestigkeit erzielt werden.

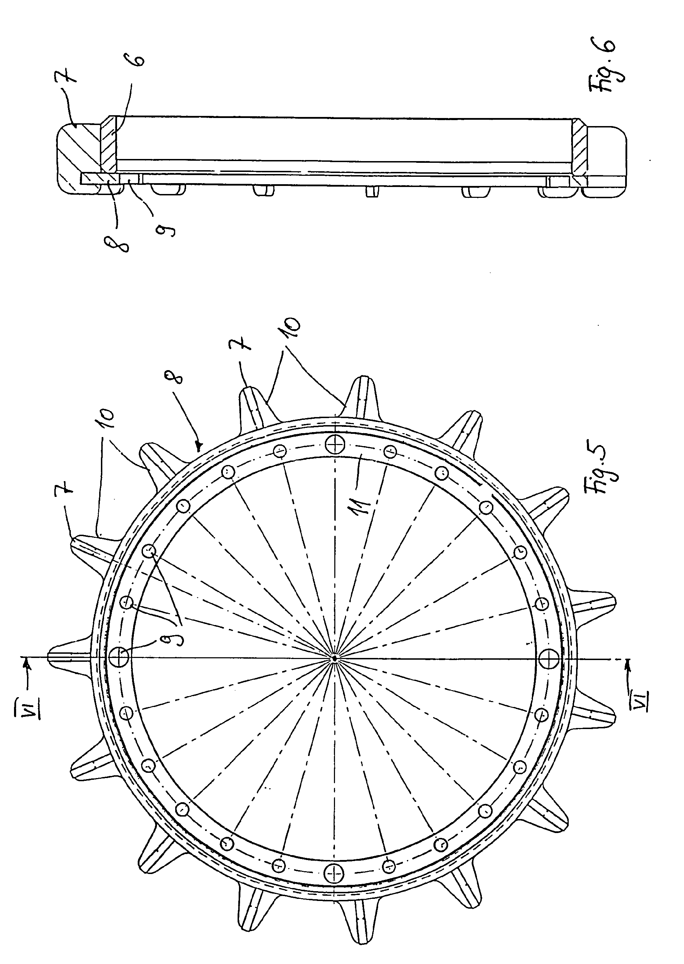

Um die einzelnen Zähne der Stirnverzahnung, d.h. des Elastomerformkörpers, radial von innen zu stützen, weist die Stützringstruktur 5 eine Verzahnungsstruktur 10 auf, die durch höckerartige Zähne gebildet wird. Die Zähne ragen analog zu den Zähnen der Stirnverzahnung radial nach außen ab und weisen eine Zahnteilung auf, die der Zahnteilung der Stirnverzahnung des Elastomerformkörpers entspricht. Die Verzahnungsstruktur ist Teil einer Ringscheibe 8, die in einer Radialebene zu einer Drehachse des Turasrades 1 ausgerichtet ist. Mit der Ringscheibe 8, vorzugsweise durch Verschweißung fest verbunden, ist ein koaxial angeordneter Trägerring 6, der zu einer Seite axial von der Ringscheibe 8 abragt. Die Zähne der Verzahnungsstruktur 10 sind zudem durch Verstärkungsstege 7 versteift, die sich über einen Teil der Tiefe der Zähne der Stirnverzahnung 2 erstrecken und plattenartig sowohl axial als auch radial nach außen erstreckt ausgerichtet sind. Zur Fixierung jedes Verstärkungssteges 7 sind in jeder Zahnspitze jedes Zahnes der Verzahnungsstruktur 10 radial nach außen offene Schlitze vorgesehen, in die die Verstärkungsstege 7 radial eingesetzt, insbesondere eingesteckt, sind. Jeder Verstärkungssteg 7 ist sowohl mit der Verzahnungsstruktur 10, d.h. mit der Ringscheibe 8, als auch mit dem Trägerring 6 verschweißt. Somit ergibt sich eine in den Fig. 5 und 6 deutlich erkennbare Schweißkonstruktion aus metallischen Material, vorliegend aus einer Aluminiumlegierung. Die Verstärkungsstege und die Zähne der Ringscheibe 8, die gemeinsam das Verzahnungsskelett für den Elastomerformkörper bilden, sind derart ausgeführt, dass sie auch bei Abriss von einem oder mehreren Zähnen des Elastomerformkörpers noch eine sichere Verzahnung von Kette und Turasrad gewährleisten und somit gute Notlaufeigenschaften aufweisen.

Um das Turasrad 1 an der jeweiligen Antriebsnabe befestigen zu können, weist die Ringscheibe 8 innenseitig einen als Befestigungsring dienenden Ringflansch 11 auf, der radial nach innen abragt und mit Montagebohrungen 9 versehen ist. Wie anhand der Fig. 1 bis 4 erkennbar ist, ist der Elastomerformkörper mit einem den Ringflansch verdeckenden Innenring und auf Höhe der Montagebohrungen 9 mit korrespondierenden Durchtritten 4a versehen, so dass entsprechende Montageschrauben, die das Turasrad 1 an der Antriebsnabe befestigen, durch diese Durchtritte 4a und durch die Montagebohrungen 9 hindurch geschoben werden können.

In Fig. 1 und 2 ist der Elastomerformkörper 1a mit der Stirnverzahnung 2 und den Durchtritten 4a dargestellt, wobei der besseren Übersichtlichkeit halber die Darstellung hier ohne die integrierte Stützringstruktur 5 erfolgt ist. Da in Fig. 1 die Rückseite des Elastomerformkörpers 1a dargestellt ist, ist gut erkennbar, dass auch der Elastomerformkörper einen Innenring aufweist, der axial vor dem als Befestigungsring dienenden Ringflansch 11 der Stützringstruktur 5 positioniert ist. Dieser Innenring überdeckt somit den Ringflansch 11 nach vorne. Gleichzeitig gewährleistet er gemeinsam mit den eingeformten Durchtritten 4a, das die entsprechenden Befestigungsschrauben sowohl den Elastomerformkörper als auch die Stützringstruktur an der Antriebsnabe fixieren.

## Patentansprüche

1. Turasrad für ein Kettenlaufwerk eines Kettenfahrzeugs mit einer Stirnverzahnung aus einem geräuschdämpfenden Werkstoff, auf der im Betrieb des Kettenlaufwerkes Führungselemente einer Kette abrollen, und die innenseitig durch eine Stützringstruktur aus einem formstabilen Werkstoff mit einer ringförmigen Verzahnungsstruktur verstärkt ist, deren Zahnteilung einer Zahnteilung der Stirnverzahnung (2) entspricht, **dadurch gekennzeichnet, dass** die Stirnverzahnung (2) durch einen Elastomerformkörper gebildet ist.

2. Turasrad nach Anspruch 1, **dadurch gekennzeichnet, dass** der Elastomerformkörper aus einer Gummimischung hergestellt ist, die abriebfest, temperaturbeständig und verschleißfest und formbeständig gestaltet ist.

3. Turasrad nach Anspruch 1, **dadurch gekennzeichnet, dass** die Verzahnungsstruktur (10) in einer Radialebene zu einer Drehachse des Turasrades (1) ausgerichtet ist, und dass der Verzahnungsstruktur (10) auf Höhe der Zahnspitzen axial erstreckte Verstärkungsstege (7) zugeordnet sind, die auf einem koaxial zur Verzahnungsstruktur angeordneten Trägerring (6) gehalten sind.

4. Turasrad nach Anspruch 3, **dadurch gekennzeichnet, dass** die Verzahnungsstruktur (10) außenseitig an einer Ringscheibe (8) vorgesehen ist, die innenseitig mit Befestigungsmitteln (11) zur Verbindung des Turasrades (1) mit einer fahrzeugseitigen Antriebsnabe versehen ist.

5. Turasrad nach Anspruch 4, **dadurch gekennzeichnet, dass** als Befestigungsmittel ein einstückig mit der Verzahnungsstruktur (10) gestalteter Befestigungsring (11) vorgesehen ist, der mit Befestigungsaufnahmen, insbesondere mit auf Gewindebohrungen der Antriebsnabe abgestimmten Montagebohrungen (9), versehen ist.

6. Turasrad nach einem der vorhergehenden Ansprüche, **dadurch gekennzeichnet, dass** der Elastomerformkörper (1a) einen den Befestigungsring (11) der Stützringstruktur verdeckenden Innenbund aufweist, der auf Höhe der Befestigungsaufnahmen (9) mit Durchtritten (4a) versehen ist.

7. Turasrad nach Anspruch 1, **dadurch gekennzeichnet, dass** der Elastomerformkörper mit einer Stirnverzahnung (2) in Form einer Evolventenverzahnung versehen ist.

8. Turasrad nach einem der vorhergehenden Ansprüche, **dadurch gekennzeichnet, dass** die Stützringstruktur als stoffschlüssig verbundene Konstruktionseinheit, insbesondere als Schweißkonstruktion, gestaltet ist.

9. Verfahren zur Herstellung eines Turasrades nach Anspruch 1, **dadurch gekennzeichnet, dass** die Stützringstruktur (5) in eine Form zur Herstellung des Elastomerformkörpers (1a) eingebettet wird, und dass anschließend in die Form flüssiges Elastomermaterial eingeführt wird, das die Stützringstruktur (5) umschließt.

10. Verfahren nach Anspruch 9, **dadurch gekennzeichnet, dass** als Elastomer eine Gummimischung eingesetzt wird, die durch Vulkanisierung um die Stützringstruktur geformt wird.
